# EUROPÄISCHE PATENTSCHRIFT

(11) **EP 2 226 173 B1**
(45) Veröffentlichungstag und Bekanntmachung des Hinweises auf die Patenterteilung: **28.11.2012**
(21) Anmeldenummer: 10001788.8
(22) Anmeldetag: 22.02.2010
(51) Int. Cl.: B29C 45/00, B29C 45/28

(54) **Vorrichtung zum Spritzgießen, insbesondere zum Kaskadenspritzgießen, und Verwendung der Vorrichtung**
Apparatus for injection moulding, in particular cascade injection moulding and use of the apparatus
Dispositif de moulage par injection, notamment de moulage par injection en cascades, et utilisation du dispositif

(30) Priorität: 06.03.2009 DE 102009012082
(43) Veröffentlichungstag der Anmeldung: 08.09.2010
(73) Patentinhaber: Incoe International Inc., 63322 Rödermark (DE)
(72) Erfinder: Striegel, Christian, 63512 Hamburg (DE)
(74) Vertreter: Boecker, Joachim

(56) Entgegenhaltungen:
- EP-A2- 0 269 091
- JP-A- 6 064 002
- GAULER K: "BINDENAEHTE VON SPRITZGIESSTEILEN BESEITIGEN" PLASTVERARBEITER, HUETHIG GMBH, HEIDELBERG, DE, Bd. 37, Nr. 10, 1. Oktober 1986 (1986-10-01), Seiten 226-228, XP002069379 ISSN: 0032-1338

## Beschreibung

Die vorliegende Erfindung bezieht sich auf eine Vorrichtung zum Spritzgießen, insbesondere zum Kaskadenspritzgießen, gemäß den Oberbegriffen des Anspruches 1. Ferner bezieht sie sich auf ein Verfahren zum Spritzgießen.

Beim Spritzgießen flacher und/oder langgestreckter Bauteile über einen einzigen Anschnittpunkt (Angussöffnung) ist es schwierig, die Kavität der Formwerkzeugs vollständig mit Schmelze zu füllen. Außerdem gelangt die Schmelze in die vom Anschnittpunkt entfernten Bereiche der Kavität bereits mit einer deutlich verminderten Temperatur, wodurch es zu Inhomogenitäten in der Struktur der gegossenen Bauteile kommen kann.

Aus diesem Grunde ist es insbesondere beim Gießen langgestreckter und/oder flacher Bauteile bekannt, die Kavität der Formwerkzeugs über mehrere Anschnittpunkte mit Schmelze zu füllen. Hierbei besteht jedoch das Problem, dass die von den Anschnittpunkten ausgehenden Fließfronten der Schmelze irgendwo im Bereich zwischen benachbarten Anschnittpunkten aufeinandertreffen, wobei es zur Bildung von Bindenähten kommt. Solche Bindenähte stellen Schwachpunkte in den gespritzten Bauteilen dar. Außerdem sind die Bindenähte, je nach Material, Oberfläche oder Farbe, sichtbar, so dass solche Bauteile beispielsweise durch Lackierung nachbehandelt werden müssen.

Um die Entstehung solcher Bindenähte zu vermeiden, ist es bei Verwendung von Nadelverschlussdüsen bekannt, die verschiedenen Düsen zu unterschiedlichen Zeitpunkten zu öffnen, und zwar in der Weise, dass beispielsweise mit dem Einspritzen über eine erste Düse begonnen wird, und dann, wenn die von dieser Düse ausgehende Fliessfront den Anschnittpunkt einer benachbarten Düse erreicht hat, diese öffnet. In entsprechender Weise wird mit dem Öffnen der noch weiter von der ersten Düse entfernten Düsen gewartet. Entsprechendes gilt, wenn der Einspritzvorgang über einen zentralen Anschnittpunkt beginnt, der von mehreren, vorzugsweise auf einem Kreisbogen um den ersten Anschnittpunkt liegenden weiteren Anschnittspunkten umgeben ist. Diese öffnen, wenn die Fließfront vom zentralen Anspritzpunkt die umgebenden Anschnittspunkte erreicht oder überschritten hat. Dieses Einspritzen in zeitlichen Abständen über mehrere Nadelverschlussdüsen wird als "Kaskadenspritzgießen" bezeichnet.

Das soweit beschriebene Kaskadenverfahren hat den Nachteil, dass beim Öffnen einer zweiten oder weiterer Düsen die Schmelze mit dem von der Spritzgießmaschine vorgegebenen Druck eingespritzt wird, der für alle Düsen gleich groß ist. Da beim Eintreffen der Fließfront von einer zuvor geöffneten Düse am Anschnitt einer benachbarten Düse die Schmelze der Fließfront bereits eine Abkühlung und einen Druckverlust erlitten hat, entstehen durch das explosionsartige Hinzutreten der unter vollem Druck stehenden Schmelze an der später öffnenden Düse unerwünschte Fließfrontmarkierungen. Dies kann vermieden werden, indem die später öffnenden Düsen nicht schlagartig, sondern langsam geöffnet werden und somit der anfängliche Einspritzdruck vermindert ist.

Um dies zu erreichen, ist es bekannt, in den individuellen Schmelzekanal zu einer Düse beziehungsweise im Schmelzekanal der Düse selbst eine von der Ventilstange betätigte Drosselvorrichtung vorzusehen, sowie einen Drucksensor, der den Druck der Schmelze stromabwärts der Drosselvorrichtung misst. Dieser Druckmesswert wird mit einem Drucksollwert verglichen, und die Regelabweichung steuert die Stellung des Kolbens in dem Kolben-Zylinderantrieb für die Ventilstange der Düse. Diese Einrichtung zur Vermeidung eines explosionsartigen Eintritts von Schmelze an zeitlich nachgeschalteten Anschnittpunkten hat den Nachteil, dass sie sehr aufwendig ist. Die genannte Regelanordnung muss für jede verspätet öffnende Düse separat vorgesehen werden. Es ist entweder ein baulicher Eingriff in den Heißkanal-Verteilerblock der Spritzgießvorrichtung erforderlich, oder es sind spezielle Düsen erforderlich.

Aus der JP 06 064002 A ist bereits ein Spritzgießverfahren zur Herstellung langgestreckter flacher Bauteile bekannt, bei welchem die Kavität des Formwerkzeugs über drei in einer Linie angeordneten Anschnittstellen gefüllt wird, wobei die beiden seitlichen Anschnittstellen über je eine nadelventil-gesteuerte Nadelverschlussdüse gespeist werden. Die Nadelverschlussdüsen werden über hydraulisch betriebene Kolben-Zylinderantriebe betätigt. Dabei sollen die beiden seitlichen Düsen erst öffnen, wenn die Schmelze von der mittleren Düse bis zu den seitlichen Düsen vorgedrungen ist, und dieser Öffnungsvorgang der seitlichen Düsen soll gedämpft vonstatten gehen. Dies wird dadurch erreicht, dass in die Druckmittel-Leitung, die an diejenige Zylinderkammer der Kolben-Zylinderantriebe angeschlossen ist, aus der beim Öffnen der Düse flüssiges Druckmittel herausgedrückt werden muss, eine verstellbare Drossel eingefügt ist. Parallel zu dieser Drossel liegt ein Einwegglied, welches nur in Richtung zur Zylinderkammer für das flüssige Druckmittel durchlässig ist.

Bei einem Kolben-Zylinderantrieb, welche pneumatisch betrieben wird, ist diese Drosseleinrichtung zur Verhinderung eines plötzlichen Öffnens des Ventils weitgehend wirkungslos, da das gasförmige Druckmittel kompressibel ist.

Der vorliegenden Erfindung liegt die Aufgabe zugrunde, ein verzögertes Öffnen der Nadelverschlussdüsen auch dann herbei zu führen, wenn zum Betrieb des Kolben-Zylinderantriebs ein gasförmige Druckmittel verwendet wird.

Zur Lösung dieser Aufgabe wird eine Vorrichtung gemäß dem Oberbegriff des Anspruches 1 vorgeschlagen, welche die im kennzeichnenden Teil des Anspruches 1 genannten Merkmale aufweist.

Vorteilhafte Ausgestaltungen dieser Vorrichtung sind durch die Merkmale der Unteransprüchen 2 bis 4 gekennzeichnet.

Gemäss Anspruch 5 kann die Vorrichtung gemäss den Ansprüchen 1 bis 4 auch mit Vorteil bei dem oben beschriebenen Kaskadenspritzgießen verwendet werden, bei dem nach Öffnung einer ersten Düse die weiteren Düsen zeitlich abgestuft verzögert geöffnet werden.

Auch dann, wenn es sich nicht um die Vermeidung der oben beschriebenen Fließmarkierungen handelt, die beim Kaskadengießen auftreten, ist die Vorrichtung gemäß der Erfindung von Vorteil, da sich beim Spritzgießen auch an den Anschnittstellen selbst infolge des explosionsartigen Einschießens der Schmelze unerwünschte Markierungen ausbilden können. Diese können durch die Vorrichtung gemäß der Erfindung auch bei Verwendung eines gasförmigen Druckmittels für die Kolben-Zylinderantrieb vermieden oder vermindert werden, und zugleich kann dadurch die Fließgeschwindigkeit der Schmelze günstig beeinflußt werden.

Anhand der in den Figuren dargestellten Ausführungsbeispiele soll die Erfindung näher erläutert werden. Es zeigen:
- Figur 1: schematisch ein Ausführungsbeispiel einer im wesentlichen bekannten Spritzgießanlage für Kaskadenspritzgießen gemäß der Erfindung,
- Figur 2: im vergrösserten Massstab ein Detail der Figur 1,
- Figur 3: ein Ausführungsbeispiel der Vorrichtung gemäss der Erfindung, bei der der Kolben-Zylinderantrieb für eine Nadelverschlussdüse pneumatisch betätigt wird,
- Figur 4: ein zweites Ausführungsbeispiel der Vorrichtung gemäss der Erfindung,
- Figur 5: ein mit Hilfe der Vorrichtung gemäss der Erfindung hergestelltes Spritzgießteil.

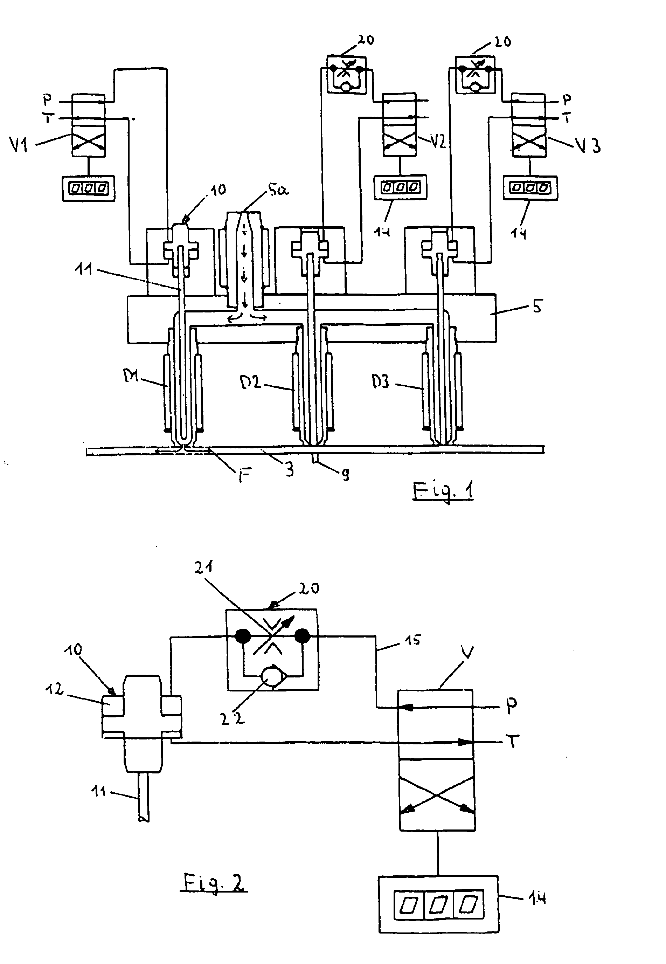

Bei der im wesentlichen bekannten Spritzgießanlage gemäß Figur 1 sind an die flache langgestreckte Kavität 3 des ansonsten nicht dargestellten Formwerkzeuges, drei Nadelverschlussdüsen D1 bis D3 angeschlossen. Das Verschließen und Öffnen der Angussöffnungen der Düsen erfolgt über Ventilstangen 11, die von je einem Kolben-Zylinderantrieb 10 angetrieben werden. Die Schmelze wird den Düsen über den Heißkanal-Verteilerblock 5 zugeführt, der bei 5a an die nicht dargestellte Spritzgießmaschine angeschlossen ist. Jeder Kolben-Zylinderantrieb 10 wird von einem Umschaltventil V1, V2, V3 gesteuert. Die Umschaltventile sind über ihren Anschluß P an eine nicht dargestellte Druckmittelquelle angeschlossen und über ihren Anschluß T an einen druckfreien Tankraum.

Beim Kaskadenspritzgießen mit der Spritzgießanlage gemäß Figur 1 öffnet zunächst die Düse Dl. Wenn die Fließfront F den Anschnittpunkt der Düse D2 erreicht oder überschritten hat, öffnet die Düse 2, und entsprechend öffnet die Düse D3, wenn die Fließfront F dort eingetroffen ist.

Über Zeiteinstellglieder 14 können die jeweiligen Verzögerungszeiten für das Öffnen der Düsen eingestellt werden, nachdem diese Verzögerungszeiten empirisch ermittelt wurden. Für die Ermittlung des korrekten Zeitpunktes für das Öffnen der zeitlich nachgeschalteten Düsen können stattdessen an den Anschnittpunkten im Formwerkzeug Sensoren vorgesehen sein. Diese können beispielsweise auf optischer Grundlage oder auf der Grundlage von Druck oder Temperatur arbeiten, indem in dem in Figur 1 nicht dargestellten Auswurfseitenteil der Form in einem bei 9 angedeuteten Kanal das Erscheinen der Fließfront erfasst wird. Durch die Vorrichtung 20 wird beim Öffnen einer Düse ein explosionsartiges Austreten der Schmelze vermieden.

Figur 2 zeigt diese Vorrichtung 20 im vergrößerten Maßstab. Sie besteht aus einem Rückschlagdrosselventil 20, welches in diejenige Druckmittelleitung 15 eingefügt ist, die an den Zylinderraum 12 des Kolben-Zylinderantriebs 10 angeschlossen ist, über den bei Druckmittelzuführung zum Zylinderraum 12 die Düse geschlossen wird. Das Rückschlagdrosselventil 20 besteht aus einer einstellbaren Drossel 21 und einem dazu parallel liegenden Rückschlagventil 22, dessen Durchlassrichtung zum Kolben-Zylinderantrieb 10 gerichtet ist.

Dank der Drossel 21 wird ein plötzliches Abfließen des Druckmittels aus dem Zylinderraum 12 und damit ein plötzliches Öffnen der zeitlich nachgeschalteten Düse und damit das explosionsartige Einspritzen der Schmelze in die Kavität verhindert, so dass es zu keinen Fließfront-Markierungen auf dem gespritzten Gegenstandes kommt. Das Schließen der Nadelverschlussdüse erfolgt dank des parallel zur Drossel 21 liegenden Rückschlagventils 22 dagegen schlagartig.

Ein solches Rückschlagdrosselventil 20 ist für die Druckmittelabführung aus der Zylinderkammer 12 für jede zeitverzögert öffnende Düse erforderlich.

In der Anordnung gemäß Figur 1 fehlt in der Druckmittelleitung für die Düse D1 ein Rückschlagdrosselventil 20, weil bei diesem Beispiel davon ausgegangen wird, daß die Düse **D1** beim Kaskadengießen zuerst öffnet.

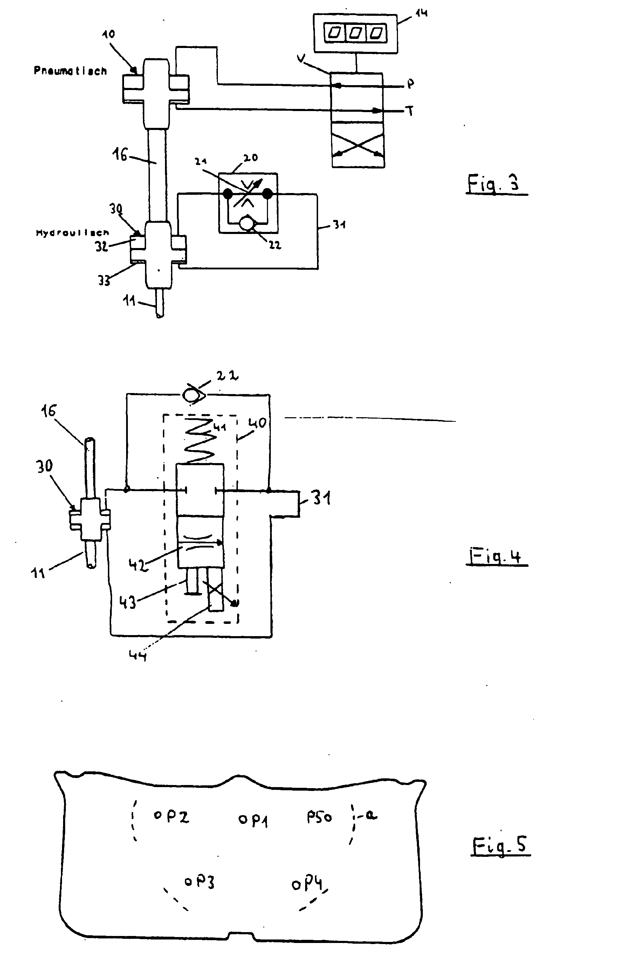

Bei pneumatisch gesteuerten Nadelverschlussdüsen ist die Wirksamkeit der anhand von Figur 2 beschriebenen Vorrichtung dadurch eingeschränkt, dass ein gasförmiges Druckmittel kompressibel ist. Gemäss der Erfindung kann auch in diesem Falle eine gleich gute Wirkung erzielt werden. Dies wird anhand des in Figur 3 dargestellten Ausführungsbeispiel der vorrichtung gemäß der Erfindung erläutert:
Der pneumatisch gesteuerte Kolben-Zylinderantrieb 10 für die ventilnadel ist in beliebiger weise mechanisch mit einer Kolben-Zylindervorrichtung 30 gekoppelt. Die beiden zylinderkammern 32 und 33 sind mit einem flüssigen Druckmittel gefüllt und über eine ebenfalls mit flüssigem Druckmittel gefüllte Kurzschlussleitung 31 miteinander verbunden. In der Kurzschlussleitung liegt die bereits beschriebene Vorrichtung aus verstellbarer Drossel 21 mit einem parallel liegenden Einwegglied 22, wobei es sich bei dieser Vorrichtung um ein handelsübliches einstellbares Rückschlagdrosselventil handeln kann. Die Durchlassrichtung des Einweggliedes ist dabei so gerichtet, dass es beim Schließen der Düse durchlässig ist. Beim Öffnen der Düse wird dann das aus der Kammer 32 zu verdrängende flüssige Druckmittel im Kurzschlusskreis 31 durch die Dossel 21 gezwungen, wodurch die Öffnungsbewegungung der Ventilnadel 11 verlangsamt wird.

Als Drosselvorrichtung 21 für die Vorrichtung 20 kann gemäß der Erfindung unter anderem ein handelsübliches elektrisch steuerbares Proportional-Stromregelventil 40 verwendet werden, wie dies in Figur 4 durch gestrichelte Umrandung kenntlich gemacht ist. Ein solches Stromregelventil wird über einen Elektromagneten 44 und eine Feder 41 betätigt, wobei die Stärke der Drosselung einstellbar ist. Darüber hinaus hat ein solches Stromregelventil weitere Einstellmöglichkeiten, die für die vorliegende Erfindung jedoch keine Bedeutung haben. So kann durch die in Figur 4 angedeutete Stellung des Stromregelventils 40 der Durchfluß für das Druckmittel vollständig unterbrochen werden. Außerdem kann das Stromregelventil einen Notbetätigungs-Druckknopf 43 haben.

Figur 5 zeigt als Beispiel eines Spritzgießteils eine gegossene Heckklappe für ein Kraftfahrzeug. Die Form, mit der dieser Gegenstand hergestellt wird, hat beispielsweise die fünf angedeuteten Anspritzpunkte P1 bis P5. Beim Gießvorgang mit der Vorrichtung gemäß der Erfindung öffnet zunächst die Düse bei P1, von wo aus sich die Fließfront der Schmelze etwa kreisförmig ausdehnt und etwa gleichzeitig alle vier Anspritzpunkte P2 bis P5 erreicht, die dann geöffnet werden. Dank des sanften Einsetzens des Einfließens der Schmelze über die Anspritzpunkte P2 bis P5 werden unerwünschte häßliche Fließfront-Markierungen, wie sie bei a in Figur 5 gestrichelt angedeutet sind, vermieden.

## Patentansprüche

1. Vorrichtung zur Durchführung eines Verfahrens zum Spritzgießen von Spritzgießartikeln, bei welcher Vorrichtung die Schmelze an einem oder mehreren Anschnittpunkten über je eine nadelventil-gesteuerte Nadelverschlussdüse (D1-D3) in die Kavität (3) eines Formwerkzeugs gespritzt werden kann und bei welcher Vorrichtung Mittel vorgesehen sind, um die Öffnungsgeschwindigkeit der einen oder mehreren Nadelverschlussdüse/n und damit den Einspritzdruck an dem/den Anschnittpunkt/en über den/die zugehörigen Kolben-Zylinderantrieb/e (10) für die Nadelverschlussdüse/n (D2,D3) derart zu steuern, dass bei mindestens einem der Kolben-Zylinderantriebe (10) beim Öffnen der Düse der Druckmittelabfluss aus dem Kolben-Zylinderantrieb (10) gedrosselt wird, **dadurch gekennzeichnet, dass** bei Verwendung eines gasförmigen Druckmittels bei mindestens einem der Kolben-Zylinderantriebe (10) die Kolbenstange (16) dieses Kolben-Zylinderantriebes (10) zusätzlich mechanisch mit einer Kolben-Zylindervorrichtung (30) mit Zylinderräumen (32,33) gekoppelt ist, bei der die beiden Zylinderräume (32,33) mit einem flüssigen Druckmittel gefüllt und über eine Kurzschlussleitung (31) miteinander verbunden sind, wobei in der Kurzschlussleitung (31) eine Drosselvorrichtung (21) mit einem parallel geschalteten Einwegglied (22) liegt, dessen Durchlassrichtung so gerichtet ist, dass es beim Schließen der Düse durchlässig ist.

2. Vorrichtung nach Anspruch 1 oder 2, **dadurch gekennzeichnet, dass** die Drosselvorrichtung (21) verstellbar ist.

3. Vorrichtung nach einem der Ansprüche 1 oder 2, **da** - **durch gekennzeichnet**, dass die Drosselvorrichtung (21) mit dem Einwegglied (22) von einem bekannten Rückschlagdrosselventil gebildet wird.

4. Vorrichtung nach einem der Ansprüche 1 oder 2, **da** - **durch gekennzeichnet**, dass die Drosselvorrichtung (21) von einem bekannten Proportional-Stromregelventil (40) gebildet wird.

5. Verwendung der Vorrichtung nach einem der vorhergehenden Ansprüche zur Durchführung eines Verfahrens zum Kaskadenspritzgießen von Spritzgießartikeln, bei welchem die Schmelze an mehr als einen Anschnittpunkt über je eine nadelventil-gesteuerte Nadelverschlussdüse (D1-D3) in die Kavität (3) des Formwerkzeugs gespritzt wird und das Öffnen der Nadelverschlussdüsen zumindest zum Teil zu unterschiedlichen Zeiten erfolgt.

## Claims

1. Apparatus for carrying out a method for injection moulding of injection moulding articles, which apparatus enables to inject the melt via one or several gate points into the cavity of an injection moulding tool by means of needle-controlled shut-off valves (D1-D3), and with which apparatus means are provided for controlling the opening speed of the one or several needle shut-off valve/s and thus controlling the injection pressure at the gate point/s by means of the associated controlling piston-cylinder-drive/s (10) for the needle shut-off valve/s (D2, D3) in such a manner that at least at one of the piston-cylinder-drive/s (10) the outflow of the pressure medium from the piston-cylinder-drive (10) is throttled when the valve is opened, **characterized in that** in case of using a gaseous pressure medium the piston rod (16) of at least one of the piston-cylinder-drives (10) is additionally connected mechanically to a piston-cylinder-device (30) with cylinder chambers (32, 33), the two cylinder chambers (32, 33) being filled with a liquid pressure medium and being connected with each other via a short circuit conduit (31) whereby a throttle device (21) in parallel with an one-way member (22) is connected into said short circuit conduit (31), the passing direction of which is oriented in such a way that it is open upon closing of the valve.

2. Arrangement according to claim 1, **characterized in that** the throttle device (21) is adjustable.

3. Arrangement according to claim 1 or 2, **characterized in that** the throttle device (21) along with the one-way member (22) is formed by a known non-return throttle valve.

4. Arrangement according to claim 1 or 2, **characterized in that** the throttle device (21) is formed by a known proportional-current-control-valve (40).

5. Use of the arrangement according to any of the preceding claims for carrying out a method for cascade injection moulding of injection moulding articles, where the melt is injected at more than one gate port via needle-controlled shut-off valves (D1-D3) into the cavity (3) of the injection moulding tool and the opening of the needle-controlled shut-off valves occurs at least partly at different times.

## Revendications

1. Dispositif pour effectuer un procédé de moulage par injection d'articles moulés par injection, dispositif dans lequel on peut injecter la masse fondue en un ou en plusieurs points d'injection, par respectivement une buse (D1 à D3) à fermeture à aiguille, commandée par une vanne à pointeau, dans l'empreinte (3) d'un outil de moulage, et dispositif dans lequel il est prévu des moyens pour commander la vitesse d'ouverture de l'une ou des plusieurs buses à fermeture à aiguille et ainsi la pression d'injection au(x) point(s) d'injection par le/les entraînement(s) (10) à piston-cylindre associés de la ou des buses (D2, D3) à fermeture à aiguille, de manière à ce que, pour au moins l'un des entraînements (10) à piston-cylindre, l'évacuation de l'agent de pression de l'entraînement (10) à piston-cylindre soit, à l'ouverture de la buse, étranglée, **caractérisé en ce que**, lorsque l'on utilise un agent de pression gazeux pour au moins l'un des entraînements (10) à pis-Lon-cylindre, la tige (16) de piston de cet entraînement (10) à piston-cylindre est accouplée, en outre, mécaniquement à un dispositif (30) à piston-cylindre ayant des chambres (32, 33) de cylindre, dans lequel les deux chambres (32, 33) de cylindre sont emplies d'un agent de pression liquide et sont reliées entre elles par un conduit (31) de court-circuit, dans lequel il y a, dans le conduit (31) de court-circuit, un dispositif (21) d'étranglement ayant un élément (22) unidirectionnel monté en parallèle, dont le sens de passage est dirigé de manière à être passant à la fermeture de la buse.

2. Dispositif suivant la revendication 1, **caractérisé en ce que** le dispositif (21) d'étranglement est réglable.

3. Dispositif suivant la revendication 1 ou 2, **caractérisé en ce que** le dispositif (21) d'étranglement ayant l'élément (22) unidirectionnel est formé par un clapet antiretour d'étranglement connu.

4. Dispositif suivant la revendication 1 ou 2, **caractérisé en ce que** le dispositif (21) d'étranglement est formé par une vanne (40) proportionnelle connue de régulation du débit.

5. Utilisation du dispositif suivant l'une des revendications précédentes, pour effectuer un procédé de moulage par injection en cascade d'articles moulés par injection, dans laquelle on injecte la masse fondue à plus d'un point d'injection, par respectivement une buse (D1 à D3) à fermeture à aiguille, commandée par une vanne à pointeau, dans l'empreinte de l'outil de moulage et on effectue l'ouverture des buses à fermeture à aiguille, au moins en partie, à des instants différents.
